# EUROPEAN PATENT APPLICATION

(11) **EP 3 351 508 A1**
(43) Date of publication of application: **25.07.2018**
(21) Application number: 18152633.6
(22) Date of filing: 19.01.2018
(51) Int. Cl.: C01B 25/45, C25B 1/00, C25B 1/14, H01M 4/136, H01M 4/1397, H01M 4/36, H01M 4/58, H01M 4/62, H01M 10/0525, C01B 32/23

(54) **METHOD FOR MODIFYING LITHIUM IRON PHOSPHATE, POSITIVE ELECTRODE, AND LITHIUM ION BATTERY**

(30) Priority: 22.01.2017 CN 201710057008
(71) Applicant: Optimum Battery Co., Ltd., Shenzhen City, Guangdong 518118 (CN)
(72) Inventor: JIAO, Qi fang, Shenzhen, Guangdong 518118 (CN); YANG, Fan ming, Shenzhen, Guangdong 518118 (CN); RAO, Mu min, Shenzhen, Guangdong 518118 (CN); LI, Yao, Shenzhen, Guangdong 518118 (CN)
(74) Representative: Greaves Brewster LLP

(57) **Abstract**

The present application provides a method for modifying lithium iron phosphate. According to the method for modifying lithium iron phosphate of the present application, lithium iron phosphate is modified by using a graphite oxide and a honeycomb carbon material with large specific area and big pore size, wherein, the graphite oxide is obtained by oxidizing graphite with concentrated nitric acid and concentrated phosphoric acid, the honeycomb carbon material is obtained by adjusting the temperature of a mixture consisting of lithium carbonate, sodium carbonate and potassium carbonate, injecting CO₂, and controlling the current density of the electricity for electrolysis. The method for modifying lithium iron phosphate could improve the conductivity of lithium iron phosphate, shorten the migration path and increase the migration rate of lithium ions. The present application also provides a positive electrode using the modified lithium iron phosphate and a lithium ion battery including the positive electrode. (Fig. 4)

## Description

### BACKGROUND OF THE INVENTION

### Field of the Invention

The present application generally relates to lithium ion batteries and, more particularly, to a method for modifying lithium iron phosphate, a positive electrode, and a lithium ion battery.

### Description of the Related Art

Lithium iron phosphate is capable of reversibly intercalating and deintercalating lithium ions and has advantages of abundant sources of raw materials, high specific capacity, long cycle life, safe and non toxicity, and environment friendliness, therefore, lithium iron phosphate is considered as an ideal positive electrode material for lithium ion batteries.

However, lithium iron phosphate has poor conductivity and is easily polarized during charging and discharging process. Lithium iron phosphate has bad charge and discharge performance at low temperature, which limits its application in low temperature environment, because of long migration path, low migration rate and large migration resistance for lithium ions during migration process. What's worse, when current density is increased during the charging and discharging process, the polarization increases, the migration resistance for lithium ions increases and rate performance of lithium ion battery decreases.

At present, there are mainly three methods for modifying lithium iron phosphate: firstly, doping the lithium iron phosphate with metal ions to improve the conductivity and reduce the polarization, but this method could not solve the problem of low migration rate of lithium ions; secondly, coating the lithium iron phosphate with carbon material to increase the conductivity between particles, improve the anisotropy of the particle surface, reduce the polarization and guarantee smooth migration of lithium ions, however, most of the carbon materials are amorphous carbon with disorder pore structure and uniform pore size distribution, which could not solve the problem of poor rate performance at low temperature under high current density; thirdly, nanoscale the lithium iron phosphate to shorten the migration path of lithium ions, but this method could not solve the problem of low conductivity.

In view of the foregoing, what is needed, therefore, is to provide a method for modifying lithium iron phosphate, a positive electrode, and a lithium ion battery to overcome the defects as mentioned above.

### SUMMARY OF THE INVENTION

One object of the present application is to provide a method for modifying lithium iron phosphate. A modified lithium iron phosphate prepared according to the present application has good rate performance and good charge and discharge performance under low temperature conditions.

According to one embodiment of the present application, a method for modifying lithium iron phosphate comprising steps of:
1) mixing graphite, concentrated nitric acid and concentrated phosphoric acid at a certain mass ratio and stirring in a water-bath heater to obtain a first mixture;
2) adding hydrogen peroxide into the first mixture when temperature of the first mixture rising to 80-90°C, cooling down to room temperature, washing and drying to obtain a graphite oxide;
3) mixing lithium carbonate, sodium carbonate and potassium carbonate at a certain mass ratio and grinding to obtain a second mixture;
4) heating the second mixture, inserting a iron wire and a Ni-Gr wire, injecting CO₂, and providing electricity for electrolysis to obtain an electrolytic product;
5) washing the electrolytic product by hydrochloric acid and deionized water, and drying to obtain a honeycomb carbon material;
6) dispersing the graphite oxide and lithium iron phosphate in absolute ethyl alcohol and reacting in a microwave reactor for a period of time to obtain a third mixture;
7) adding the honeycomb carbon material into the third mixture and reacting in a high pressure reactor, washing and drying to obtain a modified lithium iron phosphate.

According to one aspect of the present application, in step 1), the mass ratio of graphite, concentrated nitric acid and concentrated phosphoric acid is 1:6:(4-6).

According to one aspect of the present application, in step 2), a mass ratio of hydrogen peroxide to graphite is 1:(2-2.5).

According to one aspect of the present application, in step 2), the drying process is carried out with a drying temperature of 90-100°C and a drying time of 6-8h.

According to one aspect of the present application, in step 3), the mass ratio of lithium carbonate, sodium carbonate and potassium carbonate is (4-5):1:1.

According to one aspect of the present application, in step 4), heating the second mixture to 550-600°C before inserting the iron wire and the Ni-Gr wire.

According to one aspect of the present application, in step 4), the electricity provided for electrolysis has a current density of 200-300mA/cm³.

According to one aspect of the present application, in step 5), the hydrochloric acid has a concentration of 1%-2%.

According to one aspect of the present application, in step 6), a mass ratio of lithium iron phosphate to graphite oxide is (10-12): 1.

According to one aspect of the present application, in step 7), a mass ratio of the honeycomb carbon material to lithium iron phosphate is (0.02-0.03):1.

According to one aspect of the present application, in step 7), the reacting process is carried out with a reacting temperature of 110-120°C and a reacting time of 20-24h.

One embodiment of the present application provides a positive electrode comprising a aluminum foil and a slurry coated on two opposite surfaces of the aluminum foil, wherein the slurry comprising a conductive agent, a binder, a solvent and the modified lithium iron phosphate prepared according to the method for modifying lithium iron phosphate.

One embodiment of the present application provides a lithium ion battery comprising a shell having an opening at one end, a winding core positioned in the shell, electrolyte received in the shell and immersing the winding core, and a cap cover positioned in the opening for enclosing the opening; wherein the winding core comprising the positive electrode provided according to the present application, a negative electrode and a separator positioned between the positive electrode and the negative electrode.

Compared with the prior art, the lithium ion battery provided according to the present application has better rate performance and better charge and discharge performance under low temperature conditions.

### BRIEF DESCRIPTION OF THE DRAWINGS

FIG. 1 depicts a schematic view of a positive electrode provided according to the present application;
FIG. 2 depicts a schematic view of a lithium ion battery provided according to the present application;
FIG. 3 depicts XRD patterns of a graphite oxide and a modified lithium iron phosphate prepared according to Example 1 of the present application;
FIG. 4 depicts SEM image of a honeycomb carbon material prepared according to Example 1 of the present application; and
FIG. 5 depicts N₂ adsorption-desorption curves of a traditional carbon material and the honeycomb carbon material prepared according to Example 1 of the present application.

### DETAILED DESCRIPTION OF THE PREFERRED EMBODIMENTS

In order that the objects, technical solution and technical effects of the present application could be understood more clearly, the present application will be described in more detail with reference to the accompanying drawings and examples. It should be understood that the specific examples described herein are illustrative only and are not intended to limit the present application.

According to one embodiment of the present application, a method for modifying lithium iron phosphate comprising steps of:
1) mixing graphite, concentrated nitric acid and concentrated phosphoric acid at a certain mass ratio and stirring in a water-bath heater to obtain a first mixture;
2) adding hydrogen peroxide into the first mixture when temperature of the first mixture rising to 80-90°C, cooling down to room temperature, washing and drying to obtain a graphite oxide;
3) mixing lithium carbonate, sodium carbonate and potassium carbonate at a certain mass ratio and grinding to obtain a second mixture;
4) heating the second mixture, inserting a iron wire and a Ni-Gr wire, injecting CO₂, and providing electricity for electrolysis to obtain an electrolytic product;
5) washing the electrolytic product by hydrochloric acid and deionized water, and drying to obtain a honeycomb carbon material;
6) dispersing the graphite oxide and lithium iron phosphate in absolute ethyl alcohol and reacting in a microwave reactor for a period of time to obtain a third mixture;
7) adding the honeycomb carbon material into the third mixture and reacting in a high pressure reactor, washing and drying to obtain a modified lithium iron phosphate.

Specifically, in step 1), the mass ratio of graphite, concentrated nitric acid and concentrated phosphoric acid is 1:6:(4-6).

Specifically, in step 2), a mass ratio of hydrogen peroxide to graphite is 1:(2-2.5); and the drying process is carried out with a drying temperature of 90-100 °C and a drying time of 6-8h.

Specifically, in step 3), the mass ratio of lithium carbonate, sodium carbonate and potassium carbonate is (4-5):1:1.

Specifically, in step 4), heating the second mixture to 550-600°C before inserting the iron wire and the Ni-Gr wire; and the electricity provided for electrolysis has a current density of 200-300mA/cm³.

Specifically, in step 5), the hydrochloric acid has a concentration of 1%-2%.

Specifically, in step 6), a mass ratio of lithium iron phosphate to graphite oxide is (10-12):1.

Specifically, in step 7), a mass ratio of the honeycomb carbon material to lithium iron phosphate is (0.02-0.03):1; and the reacting process is carried out with a reacting temperature of 110-120 °C and a reacting time of 20-24h.

The modified lithium iron phosphate prepared according to the present application is suitable to be an active material for positive electrode of lithium ion battery, which could not only improve the charge and discharge performance under low temperature conditions but also enhance the rate performance under low temperature conditions.

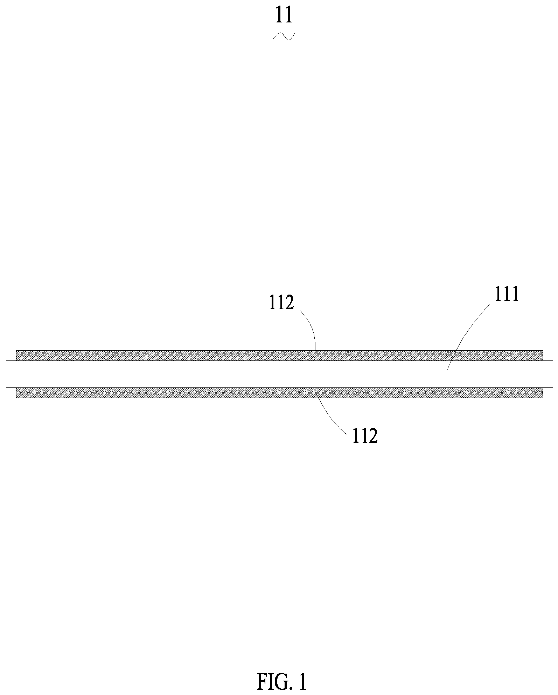

Referring to FIG. 1, one embodiment of the present application provides a positive electrode 11 comprising a aluminum foil 111 and a slurry 112 coated on two opposite surfaces of the aluminum foil 111, wherein the slurry 112 comprising a conductive agent, a binder, a solvent and the modified lithium iron phosphate prepared according to the method for modifying lithium iron phosphate.

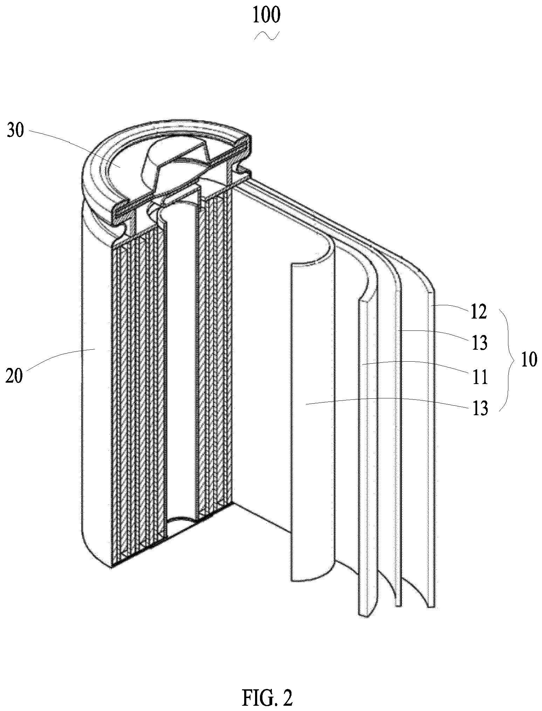

Referring to FIG. 2, one embodiment of the present application provides a lithium ion battery 100 comprising a shell 20 having an opening at one end, a winding core 10 positioned in the shell 20, electrolyte received in the shell 20 and immersing the winding core 10, and a cap cover 30 positioned in the opening for enclosing the opening; wherein the winding core 10 comprising the positive electrode 11 provided according to the present application, a negative electrode 12 and a separator 13 positioned between the positive electrode 11 and the negative electrode 12.

### Example 1:

1. mixing 10g graphite, 60g concentrated nitric acid and 40g concentrated phosphoric acid, and stirring in a water-bath heater to obtain a first mixture;
2. adding 20g hydrogen peroxide into the first mixture when temperature of the first mixture rising to 90°C, cooling down to room temperature, filtrating and washing by water, and drying in a vacuum drying oven to obtain a graphite oxide, wherein the drying process is carried out with a drying temperature of 100°C and a drying time of 6h;
3. mixing 8g lithium carbonate, 2g sodium carbonate and 2g potassium carbonate, and grinding in a ball mill to obtain a second mixture;
4. heating the second mixture in a ceramic heater to 600°C, inserting a iron wire and a Ni-Gr wire, injecting CO₂, and providing electricity with a current density of 200mA/cm³ for electrolysis to obtain an electrolytic product deposited on the surface of the iron wire;
5. washing the electrolytic product by hydrochloric acid with a concentration of 1% and deionized water, and drying in the vacuum drying oven to obtain a honeycomb carbon material, wherein the drying process is carried out with a drying temperature of 100°C and a drying time of 4h;
6. dispersing 25g lithium iron phosphate and 2.5g graphite oxide in 320mL absolute ethyl alcohol, and reacting in a microwave reactor for 3 hours to obtain a third mixture;
7. adding 0.5g of the honeycomb carbon material into the third mixture and reacting in a high pressure reactor, washing by water and drying in the vacuum drying oven to obtain a modified lithium iron phosphate, wherein the reacting process is carried out with a reacting temperature of 110°C and a reacting time of 24h;
8. mixing the modified lithium iron phosphate, carbon black, polyvinylidene fluoride and N-methylpyrrolidone to form a slurry 112 wherein a mass ratio of the modified lithium iron phosphate, carbon black and polyvinylidene fluoride is 94:3:3, coating the slurry 112 on two opposite surfaces of a aluminum foil 111 to obtain a positive electrode 11;
9. winding the positive electrode 11, a negative electrode 12 and separators 13 into a winding core 10 and sealing the winding core 10 into a shell 20 after injecting an electrolyte to obtain a lithium ion battery 100, wherein artificial graphite is selected as active material for the negative electrode 12, the separator 13 is made of polypropylene and has a thickness of 16mm, and the electrolyte containing lithium hexafluorophosphate.

### Example 2:

The lithium ion battery 100 of Example 2 is almost the same as that of Example 1, the difference lies in that the first mixture is consisting of 10g graphite, 60g concentrated nitric acid and 60g concentrated phosphoric acid.

### Example 3:

The lithium ion battery 100 of Example 3 is almost the same as that of Example 1, the difference lies in that addition amount of hydrogen peroxide is 25g.

### Example 4:

The lithium ion battery 100 of Example 4 is almost the same as that of Example 1, the difference lies in that the second mixture is consisting of 10g lithium carbonate, 2g sodium carbonate and 2g potassium carbonate.

### Example 5:

The lithium ion battery 100 of Example 5 is almost the same as that of Example 1, the difference lies in that the second mixture is heated to 550°C before inserting the iron wire and the Ni-Gr wire.

### Example 6:

The lithium ion battery 100 of Example 6 is almost the same as that of Example 1, the difference lies in that the electricity provided for electrolysis has a current density of 300mA/cm³.

### Comparative example 1:

1. mixing a carbon coated lithium iron phosphate prepared according to a traditional method, carbon black, polyvinylidene fluoride and N-methylpyrrolidone to form a slurry 112 wherein a mass ratio of the carbon coated lithium iron phosphate, carbon black and polyvinylidene fluoride is 94:3:3, coating the slurry 112 on two opposite surfaces of a aluminum foil 111 to obtain a positive electrode 11;
2. winding the positive electrode 11, a negative electrode 12 and separators 13 into a winding core 10 and sealing the winding core 10 into a shell 20 after injecting an electrolyte to obtain a lithium ion battery 100, wherein artificial graphite is selected as active material for the negative electrode 12, the separator 13 is made of polypropylene and has a thickness of 16mm, and the electrolyte containing lithium hexafluorophosphate.

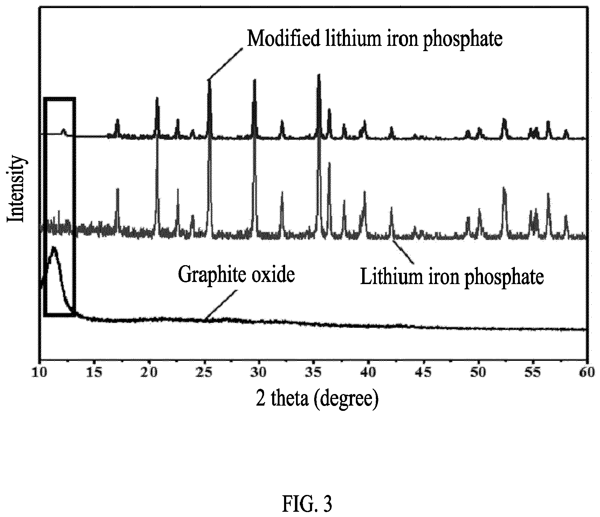

Referring to FIG. 3, the corresponding peak of graphite oxide appears in the XRD pattern of the modified lithium iron phosphate, indicating that the graphite oxide was successfully introduced into the modified lithium iron phosphate. The method for modifying lithium iron phosphate with graphite oxide could improve the conductivity of lithium iron phosphate, reduce the polarization and enhance the migration rate of lithium ions.

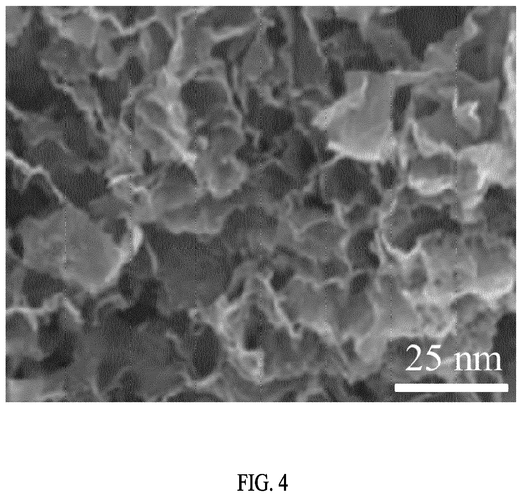

Referring to FIG. 4, the honeycomb carbon material prepared according to Example 1 of the present application has a honeycomb structure and the honeycomb structure is beneficial to increase the wettability of the electrolyte, and make it easier for lithium ions to be embedded or extracted from all directions so as to improve the charge and discharge performance of lithium ion batteries.

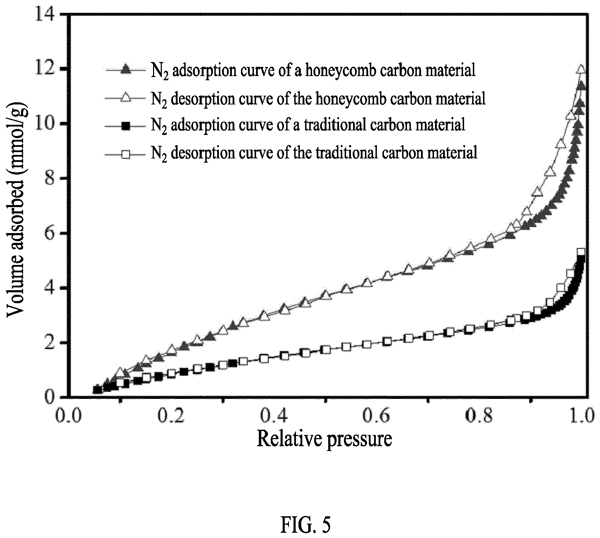

Referring to FIG. 5, the traditional carbon material has a specific surface area of 1124m²/g and an average pore size of 7nm. The honeycomb carbon material prepared according to Example 1 has a specific surface area of 1942m²/g and an average pore size of 13nm. Compared with the traditional carbon material, the honeycomb carbon material has larger specific area and bigger pore size, which could make it easier for lithium ions to be embedded or extracted, so as to improve properties of lithium ion batteries at low temperature conditions.

Constant charge current ratio and discharge ratio of lithium ion batteries prepared according to Example 1 and Comparative example 1 are shown in the following table, wherein, the constant charge current ratio was tested at -20°C with different current densities and the discharge ratio was tested at different temperatures with a current density of 1C.

| | Constant charge current ratio (%) | | Discharge ratio (%) | | |
|---|---|---|---|---|---|
| | 0.5C | 1C | -20°C | -30°C | -40°C |
| Example 1 | 74.7 | 64 | 94 | 86 | 79 |
| Comparative example 1 | 46.5 | 25 | 81 | 74 | 35 |

It could be concluded that both the constant charge ratio and the discharge ratio are gradually reduced when the current density increased from 0.5C to 1C, because the increasing of the current density may cause the increase of the polarization and the decrease of the charge and discharge performance. However, the constant charge ratio and the discharge ratio of lithium ion battery prepared according to Comparative example 1 are lower than that of lithium ion battery prepared according to Example 1, the reason lies in that the modified lithium iron phosphate has better conductivity, faster migration rate of lithium ions and lower polarization than the carbon coated lithium iron phosphate prepared according to the traditional method.

In the method for modifying lithium iron phosphate provided according to the present application, lithium iron phosphate is modified by using graphite oxide and honeycomb carbon material with large specific area and big pore size, wherein, the graphite oxide is obtained by oxidizing graphite with concentrated nitric acid and concentrated phosphoric acid, the honeycomb carbon material is obtained by injecting CO₂, adjusting the temperature of a mixture consisting of lithium carbonate, sodium carbonate and potassium carbonate, and controlling the current density of the electricity for electrolysis. The method for modifying lithium iron phosphate could improve the conductivity of lithium iron phosphate, shorten the migration path and increase the migration rate of lithium ions.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for modifying lithium iron phosphate, comprising steps of:
1) mixing graphite, concentrated nitric acid and concentrated phosphoric acid at a certain mass ratio and stirring in a water-bath heater to obtain a first mixture;
2) adding hydrogen peroxide into the first mixture when temperature of the first mixture rising to 80-90 °C, cooling down to room temperature, washing and drying to obtain a graphite oxide;
3) mixing lithium carbonate, sodium carbonate and potassium carbonate at a certain mass ratio and grinding to obtain a second mixture;
4) heating the second mixture, inserting a iron wire and a Ni-Gr wire, injecting CO₂, and providing electricity for electrolysis to obtain an electrolytic product;
5) washing the electrolytic product by hydrochloric acid and deionized water, and drying to obtain a honeycomb carbon material;
6) dispersing the graphite oxide and lithium iron phosphate in absolute ethyl alcohol and reacting in a microwave reactor for a period of time to obtain a third mixture;
7) adding the honeycomb carbon material into the third mixture and reacting in a high pressure reactor, washing and drying to obtain a modified lithium iron phosphate.

2. The method for modifying lithium iron phosphate according to claim 1, wherein the mass ratio of graphite, concentrated nitric acid and concentrated phosphoric acid is 1:6:(4-6).

3. The method for modifying lithium iron phosphate according to claim 1, wherein a mass ratio of hydrogen peroxide to graphite in step 2) is 1:(2-2.5).

4. The method for modifying lithium iron phosphate according to claim 1, wherein the drying process of step 2) is carried out with a drying temperature of 90-100°C and a drying time of 6-8h.

5. The method for modifying lithium iron phosphate according to claim 1, wherein the mass ratio of lithium carbonate, sodium carbonate and potassium carbonate is (4-5):1:1.

6. The method for modifying lithium iron phosphate according to claim 1, wherein heating the second mixture of step 4) to 550-600°C before inserting the iron wire and the Ni-Gr wire.

7. The method for modifying lithium iron phosphate according to claim 1, wherein the electricity provided in step 4) has a current density of 200-300mA/cm³.

8. The method for modifying lithium iron phosphate according to claim 1, wherein the hydrochloric acid of step 5) has a concentration of 1%-2%.

9. The method for modifying lithium iron phosphate according to claim 1, wherein a mass ratio of lithium iron phosphate to graphite oxide in step 6) is (10-12):1.

10. The method for modifying lithium iron phosphate according to claim 1, wherein a mass ratio of the honeycomb carbon material to lithium iron phosphate in step 7) is (0.02-0.03):1.

11. The method for modifying lithium iron phosphate according to claim 1, wherein the reacting process in step 7) is carried out with a reacting temperature of 110-120°C and a reacting time of 20-24h.

12. A positive electrode (11), comprising a aluminum foil (111) and a slurry (112) coated on two surfaces of the aluminum foil (111), wherein the slurry (112) comprising a conductive agent, a binder, a solvent and the modified lithium iron phosphate prepared according to claim 1.

13. A lithium ion battery (100), comprising a shell (20) having an opening at one end, a winding core (10) positioned in the shell (20), electrolyte received in the shell (20) and immersing the winding core (10), and a cap cover (30) positioned in the opening for enclosing the opening; wherein the winding core (10) comprising the positive electrode (11) of claim 12, a negative electrode (12) and a separator (13) settled between the positive electrode (11) and the negative electrode (12).
